# EUROPÄISCHE PATENTANMELDUNG

(11) **EP 0 845 443 A1**
(43) Veröffentlichungstag der Anmeldung: **03.06.1998**
(21) Anmeldenummer: 97118845.3
(22) Anmeldetag: 29.10.1997
(51) Int. Cl.: C04B 7/52, B01D 53/50

(54) **Verfahren zur Entfernung von Schwefeldioxid aus Abgasen einer Ofenanlage**

(30) Priorität: 29.11.1996 DE 19649663
(71) Anmelder: E. SCHWENK BAUSTOFFWERKE KG, 89077 Ulm (DE)
(72) Erfinder: Bauer, Klaus, Dipl.-Ing., 89081 Ulm (DE); Thormann, Jürgen, Dipl.-Ing., 06406 Bernburg (DE); Lohnherr, Ludger, Ing., 59302 Oelde (DE)
(74) Vertreter: Tetzner, Michael

(57) **Zusammenfassung**

Die Erfindung befaßt sich mit der Entfernung von Schwefeldioxid (SO₂) aus den Abgasen einer zur Zementherstellung dienenden Ofenanlage mit einem Brennofen, einem Rohmehlvorwärmer und einem Klinkerkühler, wobei das Rohmehl aus einer Rohmaterial-Mahlanlage zugeführt und Zementklinker in einer Zementmahlanlage gemahlen wird. Eine besonders weitgehende SO₂-Abscheidung kann auf relativ einfache Weise dadurch erreicht werden, daß wenigstens ein Teilstrom der Vorwärmerabgase durch die Zementmahlanlage hindurchgeleitet und dabei SO₂ aus den Abgasen von Zementpartikeln absorbiert wird.

## Beschreibung

Die Erfindung betrifft ein Verfahren zur Entfernung von Schwefeldioxid (SO₂) aus den Abgasen einer zur Zementherstellung dienenden Ofenanlage mit einem Brennofen, einem dem Brennofen vorgeschalteten Rohmehl-Vorwärmer und einem dem Brennofen nachgeschalteten Klinkerkühler, wobei das dem Vorwärmer aufzugebende Rohmehl aus einer Rohmaterial-Mahlanlage zugeführt und abgekühlter Zementklinker in einer Zementmahlanlage gemahlen wird.

Derartige Anlagen sind aus der Praxis in verschiedenen Ausführungsformen bekannt. Je nach den in der Ofenanlage verarbeiteten Rohmaterialien und/oder den in der Ofenanlage verwendeten Brennstoffen enthalten die aus dem Rohmehl-Vorwärmer kommenden Abgase einen mehr oder weniger großen Anteil an SO₂. Da die im allgemeinen dem Rohmehl-Vorwärmer in Gasströmungsrichtung nachgeschalteten, z.B. als Elektrofilter ausgebildeten Filtereinrichtungen normalerweise nicht dafür geeignet sind, den Ausstoß an SO₂ in die Atmosphäre ausreichend zu vermindern, ist es beispielsweise auch bekannt, Vorwärmerabgase durch die Rohmühle der Rohmaterial-Mahlanlage hindurchzuleiten, um SO₂-Anteile von dem Zementrohmehl zu absorbieren. Der Absorptionseffekt von SO₂ am Zementrohmehl hat sich jedoch häufig als zu gering erwiesen.

Aus der DE-A-36 43 143 ist es ferner bekannt, Schadstoffe wie Schwefel, Chlor und Fluor aus den Abgasen einer Zementherstellungsanlage dadurch zu entfernen, daß die Vorwärmerabgase in einer Reaktionszone mit Rohmehl, teilentsäuertem Rohmehl und/oder mit teilentsäuertem, abgelöschtem Rohmehl in Berührung gebracht werden, um sie weitgehend darin einzubinden. In einer der Reaktionszone nachgeschalteten Abscheidezone wird dann der im Gasstrom enthaltene Feststoff vom Gas getrennt.

Der Erfindung liegt nun die Aufgabe zugrunde, ein Verfahren der im Oberbegriff des Anspruches 1 vorausgesetzten Art zu schaffen, das sich - im Vergleich zu den bekannten Verfahren - mit verhältnismäßig einfachen anlagentechnischen Maßnahmen durch eine deutlich verbesserte Abscheidung von Schwefeldioxid (SO₂) und ggf. anderen ähnlichen Schadstoffen aus den Abgasen der genannten Ofenanlage auszeichnet.

Diese Aufgabe wird erfindungsgemäß durch das Kennzeichen des Anspruches 1 gelöst, wobei vorteilhafte Ausgestaltungen und Weiterbildungen der Erfindung in den Unteransprüchen angegeben sind.

In den der Erfindung zugrundeliegenden Versuchen hat sich gezeigt, daß der Absorptionseffekt von Gutteilchen gegenüber SO₂ um so besser ist, je größer die spezifische Oberfläche (cm²/g) der Gutteilchen ist, mit denen die SO₂-haltigen Abgase in Berührung gebracht werden. Diesen Sachverhalt macht sich die Erfindung zunutze, indem wenigstens ein Teilstrom der Abgase aus dem Rohmehl-Vorwärmer durch die Zementmahlanlage hindurchgeleitet und dabei Schwefeldioxid (SO₂) aus den Abgasen von den Zementpartikeln absorbiert wird. Hierbei ist festzuhalten, daß die spezifische Oberfläche des in der Rohmaterial-Mahlanlage zerkleinerten Zementrohmehles niedriger ist als die spezifische Oberfläche des in der Zementmahlanlage ermahlenen Klinkers (einschließlich eventueller Zusatzkomponenten). Dementsprechend werden durch das Hindurchleiten von Vorwärmerabgasen durch die Zementmahlanlage diese Abgase sehr innig mit den in der Zementmahlanlage ermahlenen Zementpartikeln in Berührung gebracht, so daß eine besonders hohe und damit gegenüber den eingangs erwähnten bekannten Verfahren deutlich verbesserte SO₂-Absorption bzw. -Entfernung durch die Zementpartikel aus den Vorwärmerabgasen erreicht werden kann. Während also bei dem eingangs erwähnten bekannten Verfahren die Vorwärmerabgase durch die Rohmaterial-Mahlanlage hindurchgeleitet werden, wird demgegenüber bei dem erfindungsgemäßen Verfahren wenigstens ein Teilstrom der Vorwärmerabgase durch die Zementmahlanlage hindurchgeleitet, mit dem Erfolg, daß eine deutliche Verbesserung in der SO₂-Abscheidung aus den Vorwärmerabgasen erzielt werden kann.

In anlagentechnischer Hinsicht kann dies vielfach bereits durch einfache Änderungen in der Führung der entsprechenden Fördereinrichtungen bzw. Rohrleitungen herbeigeführt werden.

Zweckmäßig werden die der Zementmahlanlage zuzuführenden Vorwärmerabgase in Anpassung an eine vorbestimmte Abgastemperatur der Zementmahlanlage abgekühlt. Dieses Abkühlen kann durch an sich bekannte Maßnahmen bzw. Einrichtungsteile geschehen. So können diese Vorwärmerabgase bzw. der entsprechende Teilstrom durch wenigstens einen - auch bei bisher bekannten Anlagen meist verwendeten - Kühlturm und/oder wenigstens einen Luftwärmetauscher hindurchgeleitet und darin abgekühlt werden.

In an sich bekannter Weise enthält die Zementmahlanlage wenigstens eine Zementmühle. Hierbei wird es nun als besonders vorteilhaft angesehen, wenn die der Zementmahlanlage zuzuführenden Vorwärmerabgase auf eine Temperatur nahe ihrem Taupunkt abgekühlt werden, wobei die Abgastemperatur der Zementmühle auf eine Temperatur im Bereich von etwa 70° C eingestellt wird.

Dementsprechend können diese Vorwärmerabgase auf eine möglichst niedrige Temperatur abgekühlt werden, damit die Abgastemperatur der Zementmühle auf etwa 70° C eingestellt werden kann und damit diese Abgastemperatur möglichst nahe am Taupunkt dieser Mühlenabgase liegt, der wiederum relativ hoch sein sollte. Diese Maßnahmen tragen ebenfalls besonders vorteilhaft dazu bei, daß eine sehr wirkungsvolle SO₂-Absorption aus den Vorwärmerabgasen mit Hilfe von Zement bzw. Klinkermehl erreicht werden kann.

Bei diesem erfindungsgemäßen Verfahren hat es sich ferner als vorteilhaft erwiesen, wenn als Zementmühle (in der Zementmahlanlage) eine Wälzmühle (bzw. Rollenmühle) verwendet wird, durch die zumindest der größte Anteil der Vorwärmerabgase hindurchgeleitet wird. Diese Wälzmühlen sind besonders günstig und wirtschaftlich einzusetzen, um möglichst viele Vorwärmerabgase, ggf. alle Vorwärmerabgase, für eine wirkungsvolle Fertigmahlung des Zementklinkers (einschließlich notwendiger Zusätze) auszunutzen.

Des weiteren kann es besonders vorteilhaft sein, in die Zementmühle - eine vorbestimmte, einstellbare Menge - Wasser einzusprühen, wodurch vielfach noch eine weitere Verbesserung der SO₂-Absorption in der Zementmühle erzielt werden kann.

In letzterem Falle kann es - je nach Restfeuchte des fertigen Klinkermehles bzw. Zements - notwendig werden, einen überschüssigen Feuchtigkeitsgehalt aus dem Zement zu entfernen. Gemäß einer weiteren vorteilhaften Ausgestaltung der Erfindung kann dies dadurch erreicht werden, daß eine Wälzmühle zum Vormahlen des Zementklinkers verwendet, in diese Wälzmühle das Wasser eingesprüht und der vorgemahlene Zementklinker dann in einer nachgeschalteten Rohrmühle bzw. Kugelmühle unter gleichzeitigem Austreiben von Restfeuchtigkeit (Wasser) aus dem Mahlgut fertiggemahlen wird. Zumindest dieses Fertigmahlen kann somit nach Art einer Mahltrocknung durchgeführt werden.

Was nun die Rohmaterial-Mahlanlage anbelangt, so kann diese - wie an sich bekannt - wenigstens eine Rohmühle, z.B. ebenfalls eine Wälzmühle (Rollenmühle) oder auch eine Rohrmühle oder andere als Rohmühle geeignete Zerkleinerungseinrichtung enthalten. Erfindungsgemäß wird es hierbei als besonders vorteilhaft angesehen, wenn der bzw. jeder nach dem Prinzip der Mahltrocknung betriebenen Rohmühle erwärmte Abgase aus dem Klinkerkühler als Trocknungsgase zugeführt werden. Falls nicht genügend erwärmte Kühlerabgase verfügbar sind, dann bestehen verschiedene Möglichkeiten, zusätzliche Trocknungsgase heranzuführen. So kann es erfindungsgemäß besonders zweckmäßig sein, einen Restteilstrom der Vorwärmerabgase, also die nicht durch die Zementmahlanlage hindurchgeleiteten Vorwärmerabgase, direkt als zusätzliche Trocknungsgase der Rohmühle zuzuleiten. Eine andere zweckmäßige Möglichkeit besteht darin, daß als zusätzlich in der Rohmühle benötigtes Trocknungsgas Frischluft verwendet wird, die zuvor in wenigstens einem Luftwärmetauscher durch die Abgase aus dem Rohmehl-Vorwärmer indirekt vorgewärmt worden sind, wobei durch diesen Wärmetausch gleichzeitig der der Zementmahlanlage zuzuführende Abgasteilstrom abgekühlt werden kann. Bei dieser zuletzt geschilderten Möglichkeit der Zuführung zusätzlichen Trocknungsgases zur Rohmühle wird somit lediglich das Wärmepotential der Vorwärmerabgase zum Erwärmen von Frischluft ausgenutzt, ohne daß die Vorwärmerabgase selbst durch die Rohmühle geleitet werden. Hierbei kann zusätzlich noch eine gewünschte Abkühlung der Vorwärmerabgastemperatur erreicht werden.

Die Erfindung sei nachfolgend noch anhand einiger in der Zeichnung veranschaulichter Beispiele von Gesamtanlagen erläutert, die zur Durchführung des Verfahrens besonders geeignet sind. In dieser Zeichnung zeigen
- Fig.1: ein weitgehend als Blockschema dargestelltes Fließschema eines ersten Anlagenbeispieles;
- Fig.2: ein Fließschema für ein zweites Anlagenbeispiel, in dem die Zementmahlanlage zwei Zementmühlen enthält.

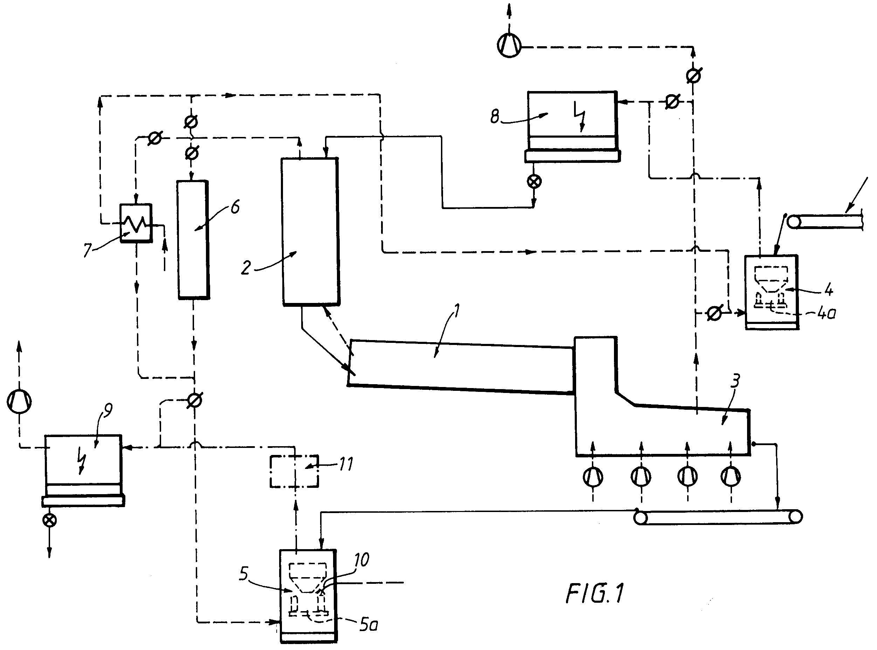

Anhand des in Fig.1 veranschaulichten Blockfließschemas seien die Hauptanlagen bzw. Anlagenteile für die Durchführung des erfindungsgemäßen Verfahrens etwas allgemeiner erläutert. Hiernach enthält die Gesamtanlage zunächst eine zur Zementherstellung dienende Ofenanlage mit einem als Brennofen dienenden Drehrohrofen 1, einem diesem Drehrohrofen 1 in bezug auf den Guttransport vorgeschalteten Rohmehl-Vorwärmer 2 sowie einem dem Drehrohrofen 1 nachgeschalteten Klinkerkühler 3. Weitere wesentliche Anlagenteile der Gesamtanlage sind eine Rohmaterial-Mahlanlage 4, eine Zementmahlanlage 5, ein Kühlturm 6 sowie wenigstens ein Luftwärmetauscher 7, wobei eine erste Filtereinrichtung (z.B. ein Elektrofilter) 8 der Rohmaterial-Mahlanlage 4 und eine zweite Filtereinrichtung (z.B. ebenfalls ein Elektrofilter) 9 gemeinsam der Zementmahlanlage 5 und dem Rohmehl-Vorwärmer 2 zugeordnet ist. Des weiteren ist in Fig.1 zu erkennen, daß die verschiedenen Anlagen bzw. Anlagenteile in sinnvoller Weise miteinander verbunden sein können, wobei gestrichtelte Linien im wesentlichen Gasleitungen, durchgehende Linie Gutleitungen und strichpunktierte Linien Leitungen für Gas-Gut-Gemische bedeuten. In den zuvor erwähnten Leitungen sind zum Teil Umschalt- bzw. Drosselklappen in zweckmäßiger Weise so angeordnet, daß verschiedene Leitungsführungen (einschließlich verschiedener Kombinationen) im Sinne des erfindungsgemäßen Verfahrens gewählt bzw. eingestellt werden können.

Was die Ausführung der Mahlanlagen anbelangt, so können diese zwar generell durch jede geeignete Ausführung einer Mahlanlage gebildet sein; besonders bevorzugt wird es jedoch, daß die Rohmaterial-Mahlanlage wenigstens eine Rohmühle 4a in Form einer Wälzmühle (Rollenmühle) mit darübergebautem Windsichter (wie an sich bekannt) und die Zementmahlanlage 5 ebenfalls wenigstens eine Zementmühle 5a in Form einer Wälzmühle (bzw. Rollenmühle) mit darübergebautem Windsichter enthält.

Aufgrund der vorhergehenden Erläuterungen ist es mit der Anlage gemäß Fig.1 ohne Schwierigkeiten möglich, das weiter oben im einzelnen beschriebene Verfahren zur Entfernung von SO₂ aus den Abgasen des Rohmehl-Vorwärmers 2 durchzuführen, und zwar auch mit den ebenfalls erläuterten verschiedenen Ausführungsvarianten.

Betrachtet man somit das Blockfließschema in Fig.1, dann kann man erkennen, daß wenigstens ein Teilstrom der Abgase aus dem Rohmehl-Vorwärmer 2 - entsprechend der gestrichelten Leitungsführungen - durch die Zementmahlanlage 5 hindurchgeleitet werden kann, um dabei SO₂ aus diesen Vorwärmerabgasen von den Zementpartikeln zu absorbieren. Der nach dem Prinzip der Mahltrocknung betriebenen Rohmühle 4a der Rohmaterial-Mahlanlage 4 werden in der Hauptsache erwärmte Abgase aus dem Klinkerkühler 3 als Trocknungsgase zugeführt. Sollte dies nicht ausreichend sein, dann besteht die Möglichkeit, einen Restteilstrom der Abgase aus dem Rohmehl-Vorwärmer 2 als zusätzliche Trocknungsgase in die Rohmühle 4a einzuleiten. Alternativ oder ggf. in Kombination dazu besteht außerdem die Möglichkeit, zusätzlich in der Rohmühle 4a benötigtes Trocknungsgas durch Frischluft zuzuführen, die zuvor in dem Luftwärmetauscher 7 durch Vorwärmerabgase indirekt vorgewärmt worden ist. Dabei wird der für diesen Wärmetausch herangezogene Abgasteilstrom abgekühlt, so daß er bei ausreichender Abkühlung direkt in die Zementmahlanlage 5 eingeleitet werden kann.

Generell sollten die der Zementmahlanlage zuzuführenden Vorwärmerabgase - wie bereits weiter oben erwähnt - abgekühlt werden, und zwar zweckmäßig auf eine Temperatur nahe dem Taupunkt dieser Abgase, wobei die Abgastemperatur der Zementmühle 5a zweckmäßig auf etwa 70° C eingestellt wird.

In Fig.1 ist an der Zementmahlanlage 5 auch eine Wassereinsprüheinrichtung 10 gestrichelt angedeutet, durch die im Bedarfsfalle Wasser in die Zementmühle 5a eingesprüht werden kann, um eine Verbesserung der SO₂-Absorption zu erzielen. Wenn es in diesem Falle - entsprechend der Restfeuchte des ermahlenen Zements - erforderlich werden sollte, einen Restfeuchtigkeitsanteil aus dem ermahlenen Zement auszutreiben, dann kann die Zementmahlanlage so ausgestaltet sein, daß die Zementmühle (Wälzmühle) 5a gewissermaßen als eine Art Vormühle verwendet wird, aus der der vorgemahlene Zement z.B. in eine Rohrmühle 11 zum Fertigmahlen weitergeleitet wird.

In bezug auf die notwendige Abkühlung des der Zementmahlanlage 5 zuzuführenden Teilstromes der Vorwärmerabgase sei noch erwähnt, daß dazu wenigstens ein Kühlturm 6 und/oder - wie bereits erwähnt - wenigstens ein Luftwärmetauscher 7 verwendet werden kann.

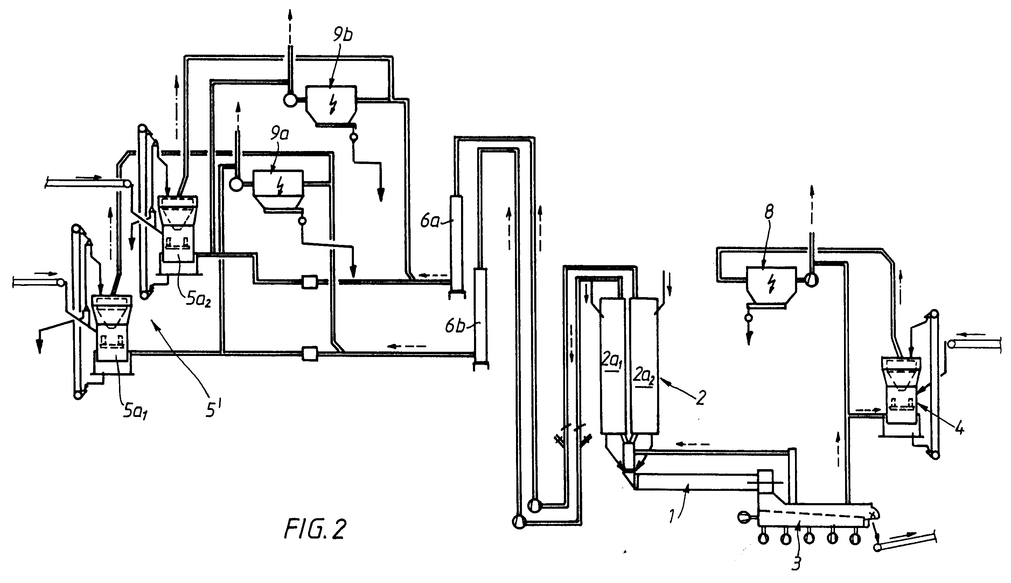

Das anhand des Fließschemas gemäß Fig.2 veranschaulichte zweite Anlagenbeispiel für die Durchführung des erfindungsgemäßen Verfahrens unterscheidet sich von dem ersten Beispiel vor allem dadurch, daß die Zementmahlanlage 5' zwei Zementmühlen 5a₁ und 5a₂ enthält, die jedoch vorzugsweise wiederum in Form einer Wälzmühle mit unmittelbar darüber angeordnetem Windsichter ausgeführt sind.

Die beiden Zementmühlen 5a₁ und 5a₂ werden parallel zueinander mit je einem Teilstrom der Abgase aus dem Vorwärmer 2' sowie mit Teilmengen des im Klinkerkühler 3 abgekühlten Zementklinkers beschickt. In diesem Zusammenhang sei erwähnt, daß die in Fig.2 veranschaulichten Doppellinien Leitungen zur Förderung von Gasen (entsprechend den gestrichelten Pfeilen) bzw. zur Förderung von Gas-Gut-Gemischen (entsprechend den strichpunktierten Pfeilen) und die dick ausgezogenen Linien Leitungen zur Förderung von Gut, d.h. von Rohmaterial, Zementrohmehl, Zementklinker und fertigen Zement, bedeuten.

In Fig.2 ist ferner veranschaulicht, daß der Rohmehlvorwärmer 2' in Form eines Schwebegasvorwärmers, insbesondere eines mehrstufigen Zyklonvorwärmers, ausgebildet sein kann und zwei parallel nebeneinander angeordnete Vorwärmstränge 2a₁ udn 2a₂ enthält, von denen jeder über eine Abgasteilleitung mit zugehörigem Kühlturm 6a bzw. 6b mit einer der beiden Zementmühlen 5a₁ bzw. 5a₂ in Verbindung steht. Jeder Teilstrom der Vorwärmerabgase wird somit wiederum durch die Zementmahlanlage 5' bzw. durch die zugehörige Zementmühle hindurchgeleitet, so daß auch in diesem Falle auf erfindungsgemäße Weise SO₂ aus den Vorwärmerabgasen mit den Zementpartikeln absorbiert werden kann.

In diesem zweiten Anlagenbeispiel gemäß Fig.2 wird es ferner für zweckmäßig angesehen, jeder der beiden Zementmühlen 5a₁ und 5a₂ einen gesonderten Filter (Elektrofilter) 9a bzw. 9b zuzuordnen, der in Anlehnung an das erste Anlagenbeispiel (Fig.1) auch für einen entsprechenden Anteil der Abgase aus dem entsprechenden Vorwärmerstrang 2a₁ bzw. 2a₂ vorgesehen ist.

Die Verwendung einer Zementmahlanlage 5' gemäß Fig.2 mit zwei Zementmühlen 5a₁ und 5a₂ sowie zugehörigem Filter 9a bzw. 9b hat den Vorteil einer besseren Verfügbarkeit bzw. Flexibilität der Gesamtanlage. Dies ist beispielsweise dann von Vorteil, wenn zu Zeiten eines besonders hohen Strombedarfes u.U. eine Verringerung des Gesamtanlagenbedarfs erforderlich werden könnte, wozu dann eine Zementmühle mit zugehörigen anderen Anlagenteilen abgeschaltet werden kann. Einen weiteren Vorteil bietet dieses Anlagenbeispiel dann, wenn eine Zementmühle wegen Wartungsarbeiten oder wegen Austauschs von Verschleißteilen abgeschaltet werden muß.

## Patentansprüche

1. Verfahren zur Entfernung von Schwefeldioxid (SO₂) aus den Abgasen einer zur Zementherstellung dienenden Ofenanlage mit einem Brennofen (1), einem dem Brennofen vorgeschalteten Rohmehl-Vorwärmer (2, 2') und einem dem Brennofen nachgeschalteten Klinkerkühler (3), wobei das dem Vorwärmer aufzugebende Rohmehl aus einer Rohmaterial-Mahlanlage (4) zugeführt und abgekühlter Zementklinker in einer Zementmahlanlage (5, 5') gemahlen wird,
dadurch gekennzeichnet,
daß wenigstens ein Teilstrom der Abgase aus dem Rohmehl-Vorwärmer (2, 2') durch die Zementmahlanlage (5, 5') hindurchgeleitet und dabei Schwefeldioxid (SO₂) aus den Abgasen von den Zementpartikeln absorbiert wird.

2. Verfahren nach Anspruch 1, dadurch gekennzeichnet, daß die der Zementmahlanlage zuzuführenden Vorwärmerabgase in Anpassung an eine vorbestimmte Abgastemperatur der Zementmahlanlage (5, 5') abgekühlt werden.

3. Verfahren nach Anspruch 2, dadurch gekennzeichnet, daß die der Zementmahlanlage zuzuführenden Vorwärmerabgase durch wenigstens einen Kühlturm (6, 6a, 6b) und/oder wenigstens einen Luftwärmetauscher (7) hindurchgeleitet und darin abgekühlt werden.

4. Verfahren nach Anspruch 2, wobei die Zementmahlanlage wenigstens eine Zementmühle enthält, dadurch gekennzeichnet, daß die der Zementmahlanlage (5, 5') zuzuführenden Vorwärmerabgase auf eine Temperatur nahe ihrem Taupunkt abgekühlt werden, wobei die Abgastemperatur der Zementmühle (5a, 5a₁, 5a₂) auf eine Temperatur im Bereich von etwa 70° C eingestellt wird.

5. Verfahren nach Anspruch 4, dadurch gekennzeichnet, daß als Zementmühle (5a, 5a₁, 5a₂) wenigstens eine Wälzmühle verwendet wird, durch die zumindest der größte Anteil der Vorwärmerabgase hindurchgeleitet wird.

6. Verfahren nach Anspruch 5, dadurch gekennzeichnet, daß in die Zementmühle (5a) Wasser eingesprüht wird.

7. Verfahren nach Anspruch 6, dadurch gekennzeichnet, daß eine Wälzmühle (5a) zum Vormahlen des Zementklinkers verwendet wird, in diese Wälzmühle das Wasser eingesprüht und der vorgemahlene Zementklinker in einer nachgeschalteten Rohrmühle (11) unter gleichzeitigem Austreiben von Restfeuchtigkeit aus dem Mahlgut fertiggemahlen wird.

8. Verfahren nach Anspruch 4, dadurch gekennzeichnet, daß die Zementmahlanlage (5') zwei Zementmühlen (5a₁, 5a₂) - vorzugsweise in Form von Wälzmühlen - enthält, die parallel zueinander mit Teilströmen der Vorwärmerabgase und Teilmengen des abgekühlten Zementklinkers beschickt werden.

9. Verfahren nach Anspruch 1, wobei die Rohmaterial-Mahlanlage wenigstens eine Rohmühle enthält, dadurch gekennzeichnet, daß der nach dem Prinzip der Mahltrocknung betriebenen Rohmühle (4a) erwärmte Abgase aus dem Klinkerkühler (3) als Trocknungsgase zugeführt werden.

10. Verfahren nach Anspruch 9, dadurch gekennzeichnet, daß ein Restteilstrom der Vorwärmerabgase direkt als zusätzliche Trocknungsgase der Rohmühle (4a) zugeleitet werden.

11. Verfahren nach Anspruch 9, dadurch gekennzeichnet, daß als zusätzlich in der Rohmühle (4a) benutztes Trocknungsgas Frischluft verwendet wird, die zuvor in wenigstens einem Luftwärmetauscher (7) durch Abgase aus dem Rohmehl-Vorwärmer (2) indirekt vorgewärmt worden ist, wobei durch diesen Wärmetausch gleichzeitig der der Zementmahlanlage (5) zuzuführende Abgasteilstrom abgekühlt wird.
